# EUROPEAN PATENT APPLICATION

(11) **EP 4 303 676 A1**
(43) Date of publication of application: **10.01.2024**
(21) Application number: 22784437.0
(22) Date of filing: 14.03.2022
(51) Int. Cl.: G05B 19/4093, B23Q 15/00

(54) **INFORMATION PROCESSING DEVICE AND INFORMATION PROCESSING PROGRAM**

(30) Priority: 05.04.2021 JP 2021064426
(71) Applicant: DMG Mori Co., Ltd., Yamatokoriyama-shi, Nara 639-1160 (JP)
(72) Inventor: ONO Takaya, Sapporo City, Hokkaido 004-0015 (JP); MATSUOKA Koji, Yamatokoriyama-shi, Nara 639-1160 (JP)
(74) Representative: Betten & Resch
(86) International application number: PCT/JP2022/011382
(87) International publication number: WO 2022/215452

(57) **Abstract**

The information processing apparatus includes a display unit that displays a selection screen for selecting one of rough processing and finishing processing as an operation type with respect to at least one processing step included in the plurality of processing steps, and a processing program generator that describes at least one selected from a group of a command for setting a time priority mode, a command for allowing a change of a feed rate, and a command for permitting processing during magazine turning in the processing program in a case where the rough processing is selected on the selection screen, and at least one selected from a group of a command for setting an accuracy priority mode, a command for making the feed rate constant, and a command for not permitting processing during magazine turning in the processing program in a case where the finishing processing is selected on the selection screen.

## Description

### TECHNICAL FIELD

The present invention relates to an information processing apparatus and an information processing program.

### BACKGROUND ART

In the above technical field, patent literature 1 discloses a technique of finely changing settings so that the operation of a machine tool changes for each of rough processing and finishing processing.

### CITATION LIST

### PATENT LITERATURE

Patent literature 1: Japanese Patent Laid-Open No. 2020-069600

### SUMMARY OF THE INVENTION

### TECHNICAL PROBLEM

In the technique described in the above patent literature, however, it is necessary to make fine settings in a processing program so that the operation of a machine tool changes for each of rough processing and finishing processing.

### SOLUTION TO PROBLEM

To solve the above problem, an apparatus according to the present invention is an information processing apparatus for generating a processing program for causing a machine tool to perform machining including a plurality of processing steps, comprising:
a display unit that displays a selection screen for selecting one operation type from a plurality of operation types including at least rough processing and finishing processing with respect to at least one processing step included in the plurality of processing steps; and
a processing program generator that determines, with respect to the processing program, to describe (i) at least one selected from a group of a command for setting a time priority mode, a command for allowing a change of a feed rate, and a command for permitting processing during magazine turning in the processing program in a case where the rough processing is selected on the selection screen, and (ii) at least one selected from a group of a command for setting an accuracy priority mode, a command for making the feed rate constant, and a command for not permitting processing during magazine turning in the processing program in a case where the finishing processing is selected on the selection screen.

To solve the above problem, another apparatus according to the present invention is an information processing apparatus for generating a processing program for causing a machine tool to perform machining including a plurality of processing steps, comprising:
a display unit that displays a selection screen for selecting one operation type from a plurality of operation types including at least rough processing and finishing processing with respect to at least one processing step included in the plurality of processing steps; and
a processing program generator that generates (i) the processing program including a command for setting a time priority mode and a command concerning a feed rate with respect to processing program in a case where the rough processing is selected on the selection screen, and (ii) the processing program including a command for setting an accuracy priority mode, a command concerning the feed rate, and a command for not permitting processing while a vibration is generated from a vibration generator in the machine tool with respect to processing program in a case where the finishing processing is selected on the selection screen.

To achieve the above object, a program according to the present invention is an information processing program for generating a processing program for performing machining including a plurality of processing steps, which causes a computer to execute a method, comprising:
displaying a selection screen for selecting one of rough processing and finishing processing as an operation type with respect to at least one processing step included in the plurality of processing steps; and
setting (i) at least one selected from a group of a command for setting a time priority mode, a command for allowing a change of a feed rate, and a command for permitting processing during magazine turning in the processing program in a case where the rough processing is selected on the selection screen, and (ii) at least one selected from a group of a command for setting an accuracy priority mode, a command for making the feed rate constant, and a command for not permitting processing during magazine turning in the processing program in a case where the finishing processing is selected on the selection screen.

### ADVANTAGEOUS EFFECTS OF INVENTION

According to the present invention, a user can implement preferable processing by a simple operation.

### BRIEF DESCRIPTION OF DRAWINGS

Fig. 1 is a block diagram showing the arrangement of an information processing apparatus according to the first example embodiment;
Fig. 2 is a block diagram showing the arrangement of a machine tool system according to the second example embodiment;
Fig. 3 is a view showing an example of a step editing screen in an information processing apparatus according to the second example embodiment;
Fig. 4 is a view showing an example of the step editing screen in the information processing apparatus according to the second example embodiment;
Fig. 5 is a view showing an example of the step editing screen in the information processing apparatus according to the second example embodiment;
Fig. 6 is a view showing an example of APT-CL data in the information processing apparatus according to the second example embodiment;
Fig. 7 is a view showing an example of feed rate control in the information processing apparatus according to the second example embodiment;
Fig. 8 is a flowchart for explaining the procedure of NC program generation processing in the information processing apparatus according to the second example embodiment;
Fig. 9 is a table for the NC program generation processing in the information processing apparatus according to the second example embodiment;
Fig. 10 is a view showing an example of an NC program generated in the information processing apparatus according to the second example embodiment; and
Fig. 11 is a view showing another example of the NC program generated in the information processing apparatus according to the second example embodiment.

### DESCRIPTION OF EXAMPLE EMBODIMENTS

Example embodiments of the present invention will now be described in detail with reference to the drawings. It should be noted that the relative arrangement of the components, the numerical expressions and numerical values set forth in these example embodiments do not limit the scope of the present invention unless it is specifically stated otherwise.

### [First Example Embodiment]

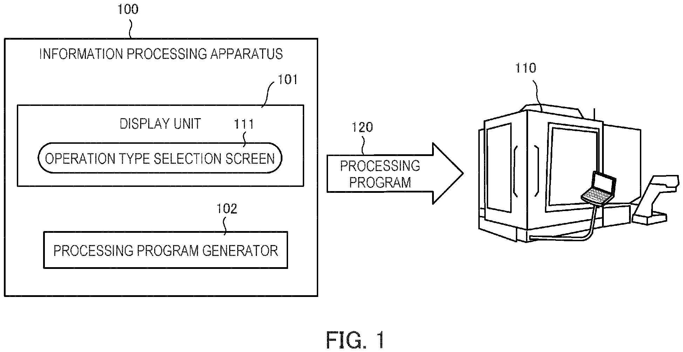

An information processing apparatus 100 according to the first example embodiment of the present invention will be described with reference to Fig. 1.

As shown in Fig. 1, the information processing apparatus 100 is an apparatus that generates a processing program for performing machining including a plurality of processing steps, and includes a display unit 101 and a processing program generator 102.

The display unit 101 displays a selection screen 111 for selecting rough processing or finishing processing as an operation type with respect to at least one processing step included in the plurality of processing steps.

If rough processing is selected on the selection screen 111, the processing program generator 102 sets, in a processing program, at least one selected from a group of a command for setting a time priority mode, a command for allowing a change of a feed rate, and a command for permitting processing during magazine turning.

According to this example embodiment, the user can generate a properly set processing program only by selecting an operation type on the selection screen, thereby implementing processing according to rough processing or finishing processing.

### [Second Example Embodiment]

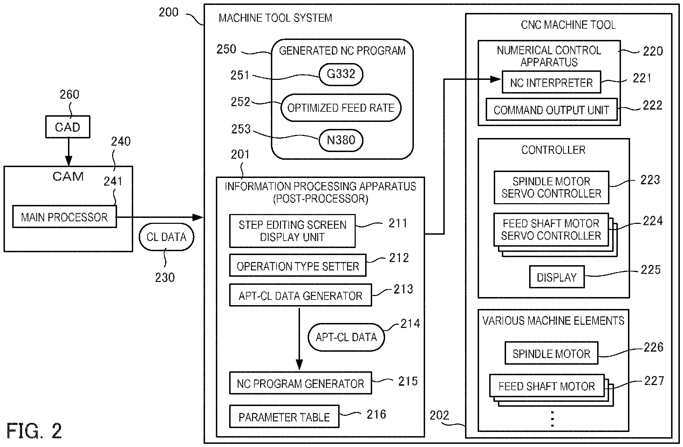

A machine tool system 200 according to the second example embodiment of the present invention will be described next with reference to the accompanying drawings from Fig. 2. Fig. 2 is a block diagram for explaining the overall arrangement of the machine tool system 200 according to this example embodiment.

### (Overall Arrangement of System)

The machine tool system 200 includes an information processing apparatus 201 and a CNC (Computerized Numerical Control) machine tool 202.

Examples of the machine tool 202 are a machine that performs additive manufacturing on a work, a machine that performs subtractive manufacturing on a work, and a machine that performs processing by emitting light such as a laser beam. More specifically, like a lathe, a drilling machine, a boring machine, a milling machine, a gear cutting machine, a grinding machine, a multi-axis processing machine, a laser processing machine, a laminating machine, and the like, a machine that undergoes numerical control based on an NC (Numerical Control) program to perform, for a work made of metal, wood, stone, or a resin, various kinds of processes such as turning, cutting, punching, grinding, polishing, rolling, forging, folding, molding, micromachining, and laminating is used. Furthermore, the machine tool 202 may have a measurement function, and may be configured to measure the dimensions and the like of a work using a measuring instrument such as a touch probe or camera.

The machine tool 202 is, for example, a 3-axis machine, and includes, as machine elements, a spindle motor 226 and a feed shaft motor 227. The spindle motor 226 rotates a tool, and the feed shaft motor 227 linearly moves a table in the X-axis and Y-axis directions via a ball screw, and linearly moves the tool or table in the Z-axis direction. The machine tool 202 can be a 5-axis machine, as a matter of course.

A numerical control apparatus 220 is an apparatus that performs numerical control for processing by the machine tool 202, and includes an NC interpreter 221 as an interpreter that interprets an NC program 250, and a command output unit 222 that outputs control commands to various kinds of controllers.

A spindle motor servo controller 223 controls the spindle motor 226 based on the control command from the command output unit 222. A feed shaft motor servo controller 224 controls the feed shaft motor 227 based on the control command from the command output unit 222.

The numerical control apparatus 220 interprets the NC program 250 generated by the information processing apparatus 201, recognizes a tag (a comment or a G-code for a subroutine call) embedded in the program, and outputs a special control command to the machine tool 202.

The information processing apparatus 201 is a so-called CAM post-processor, and performs step editing for CL data (Cutter Location data) 230 as tool path data acquired from a CAM 240, and then generates the NC program 250 as a processing program to be used by the numerical control apparatus 220.

The CAM 240 includes a main processor 241. The main processor 241 generates the CL data 230 based on shape data acquired from a CAD (Computer-Aided Design) 260. A case where the CL data 230 is acquired from the CAM 240 has been explained. However, the APT-CL data can similarly be generated by reverse engineering the NC program acquired from the CAM 240 to extract necessary information.

### (Arrangement of Information Processing Apparatus)

The information processing apparatus 201 includes a step editing screen display unit 211, an operation type setter 212, an APT(Automatically Programmed Tool)-CL data generator 213, an NC program generator 215, and a parameter table 216.

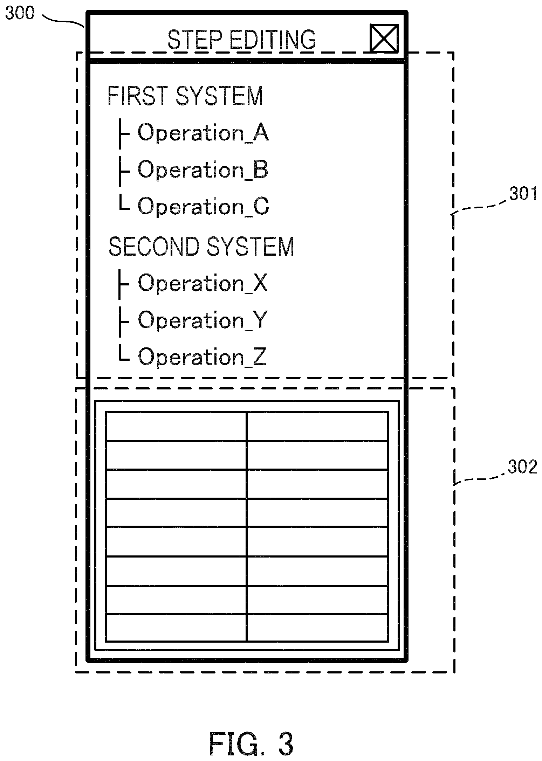

The step editing screen display unit 211 displays a step editing screen 300, shown in Fig. 3, as a GUI for making parameter settings for each step (= operation) which is called a step editing screen. The step editing screen 300 includes an operation tree display portion 301 and a parameter setting portion 302. In the operation tree display portion 301, operations are displayed in a tree structure for each system (spindle or tool rest). An operation indicates a group of processing steps. A single processing step (plane machining, hole machining, groove machining, or the like) or continuous processing steps are grouped as one operation. The step editing screen 300 shown in Fig. 3 is an example for a machine tool with a lower tool rest, and thus displays two systems of the first system and the second system. However, for a 5-axis machine without a lower tool rest, only the first system is displayed.

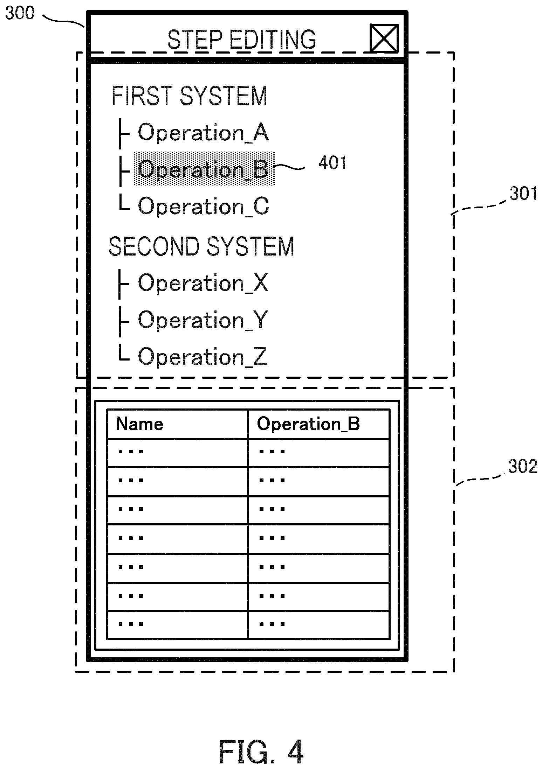

As shown in Fig. 4, if one operation 401 is selected in the operation tree display area 301, the parameters of the selected operation are displayed in the parameter setting area 302 in which each parameter can be edited. More specifically, it is possible to edit parameters such as a workpiece coordinate system, a coordinate system origin, a rotary-axis rotation angle, the maximum and clearance of a safety point Z, a dynamic fixture offset, a workpiece installation error correction, and an inclined surface machining command.

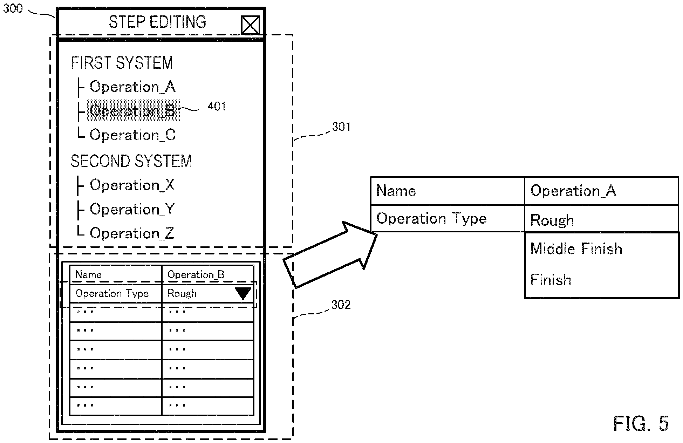

As shown in Fig. 5, there is an "operation type" as one of the parameters displayed in the parameter setting portion 302, and a pull-down menu is prepared for it. The user can select one of "Rough (rough processing)", "Middle Finish (middle finishing processing)", and "Finish (finishing processing)" in the pull-down menu.

Upon accepting the user selection, the operation type setter 212 sets and registers one of "Rough (rough processing)", "Middle Finish (middle finishing processing)", and "Finish (finishing processing)" for each operation.

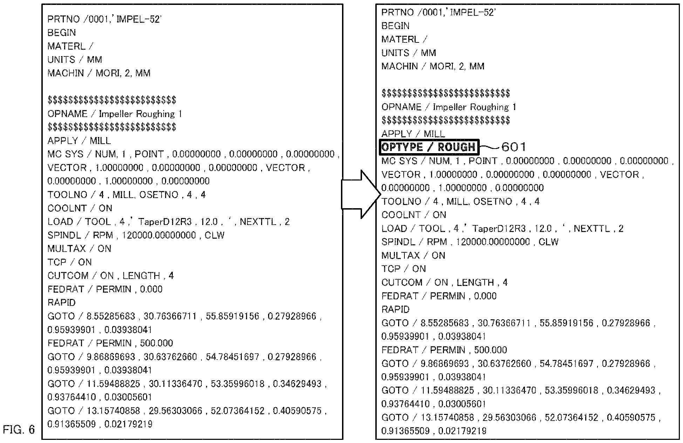

The APT-CL data generator 213 generates APT-CL data 214 added with an APT command for classification into rough processing or finishing processing in accordance with the registered operation type. More specifically, in the case of rough processing, an APT command 601 of "OPTYPE/ROUGH" is inserted into a predetermined position, as shown in Fig. 6. In the case of middle finishing processing, an APT command of "OPTYPE/MIDDLE" is inserted into the same position, and in the case of finishing processing, an APT command of "OPTYPE/FINISH" is inserted into the same position.

Next, the NC program generator 215 generates an NC program from the APT-CL data with reference to the parameter table 216.

At this time, the NC program generator 215 determines which of "OPTYPE/ROUGH", "OPTYPE/MIDDLE", and "OPTYPE/FINISH" is the APT command described in the APT-CL data 214. Then, in the NC program, commands (G-code and M-code) corresponding to the APT command are described as in (1) to (3) below.
(1) In processing mode selection (G332), a processing mode according to the purpose is set. For example, a "time priority mode" is set for rough processing, an "intermediate mode" is set for middle finishing processing, and an "accuracy priority mode" is set for finishing processing. The "time priority mode" is a mode of giving a highest priority to shortening of the processing time. The "accuracy priority mode" is a mode of prioritizing the processing accuracy, and is used for processing that requires the processing accuracy or a finishing surface. The "intermediate mode" is a mode between the time priority mode and the accuracy priority mode, and is used for middle finishing processing that requires the accuracy and time.

More specifically, one of "G332 R1", "G332 R2", "G332 R3", and "G332 R4" is inserted into a predetermined position (for example, a position after the M-code (M380) for position detection) in the NC program.

The arguments R1 to R4 are set in the following cases, respectively.
R1: set for rough processing
R2: set for middle finishing processing
R3: set for finishing processing
R4: manually set by the user, as appropriate (the mode used when the user especially wants to perform processing in consideration of accuracy)

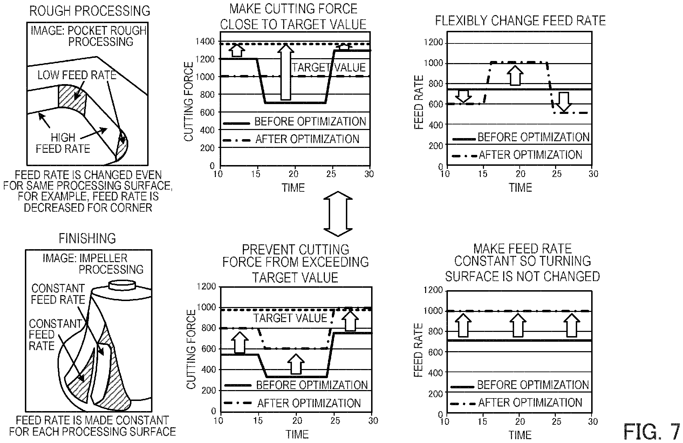

(2) As shown in Fig. 7, the processing time is shortened by changing the feed rate so as to level the cutting force for rough processing in a command of controlling the feed rate by estimating the cutting force. On the other hand, for finishing processing, if the feed rate is often changed, the turning surface is changed to degrade surface quality, and thus the feed rate is set not to be changed. An f-number corresponding to the simulation result of the cutting force is added as the feed rate to the NC program at the time of post output. Such f-number that the cutting force is leveled is output at the time of rough processing.

In simulation of the cutting force, the target value of the cutting force is calculated in consideration of tool wear or tool chatter. The feed rate is changed to obtain the cutting force close to the target value.

(3) ON/OFF of the finishing processing mode selection (M380, M381) is set. These are the M-codes that control the magazine at the time of finishing processing. If finishing processing is performed during magazine turning, the processing accuracy of the processing surface may degrade due to a vibration. To cope with this, for finishing processing, M380 (finishing processing mode ON) and M381 (finishing processing mode OFF) are inserted before and after the finishing processing program. This controls to perform finishing processing after the end of magazine turning in the machine tool.

Note that the timings of magazine turning and finishing processing are controlled here but the present invention is not limited to this. A command of not permitting processing while a vibration is generated from a vibration generator other than the magazine may be inserted into the NC program. Examples of the vibration generator are a chip conveyer and a pump of a coolant discharger, in addition to the magazine.

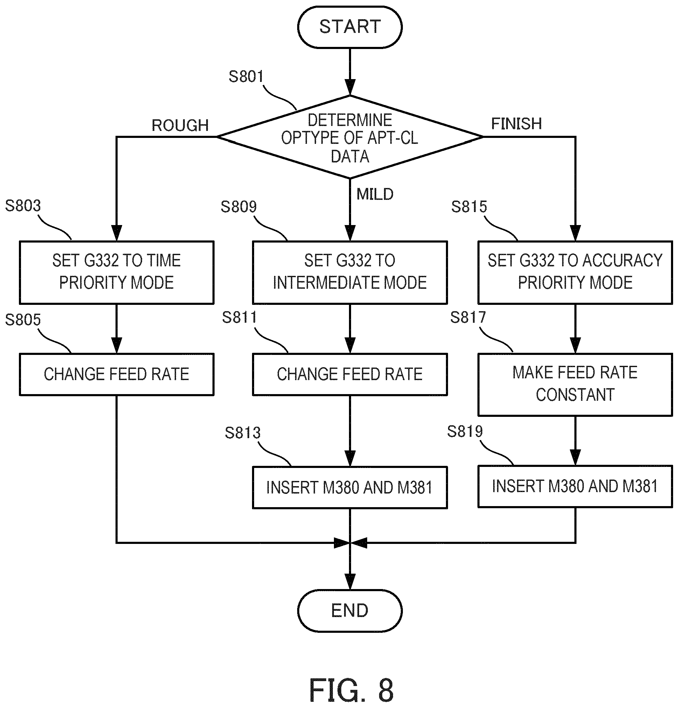

Fig. 8 is a flowchart for explaining the procedure of processing executed by the NC program generator 215.

After the APT-CL data 214 is input, the NC program generator 215 determines OPTYPE in step S801. If rough processing is determined, the process advances to step S803 to set G332 to the time priority mode. Next, in step S805, the feed rate is flexibly changed to shorten the processing time.

If, as a result of determining OPTYPE in step S801, middle finishing processing is determined, the process advances to step S809 to set G332 to the intermediate mode, and then the feed rate is flexibly changed in step S811 to shorten the processing time. Furthermore, in step S813, M380 and M381 are inserted before and after the middle finishing processing command, and magazine turning during processing is stopped.

If, as a result of determining OPTYPE in step S801, finishing processing is determined, the process advances to step S815 to set G332 to the accuracy priority mode, and then the feed rate is made constant in step S817. Furthermore, in step S818, M380 and M381 are inserted before and after the finishing processing command, and magazine turning during processing is stopped.

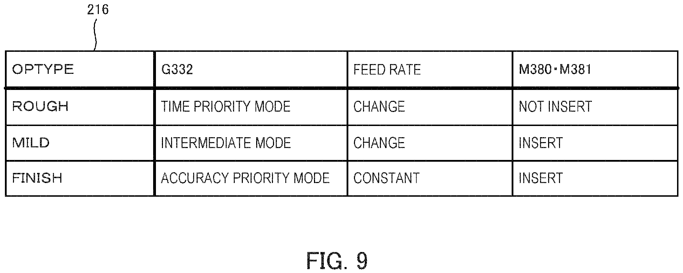

These control processes can be implemented with reference to the parameter table 216 shown in Fig. 9.

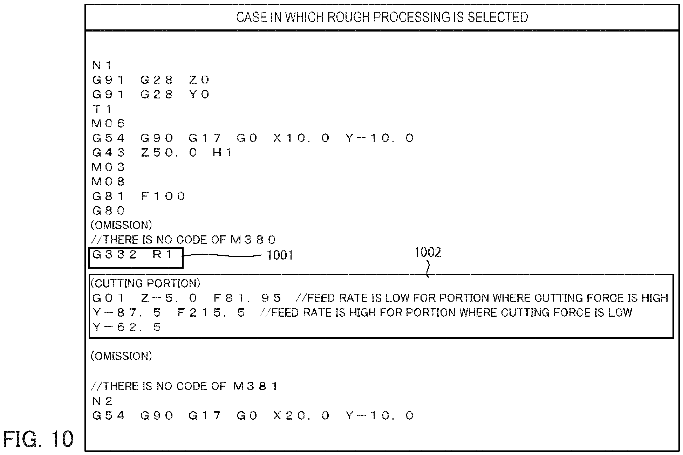

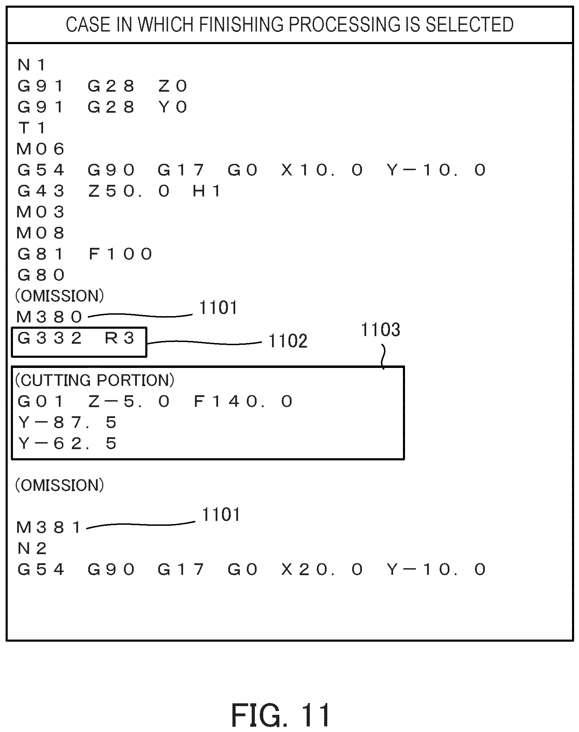

Figs. 10 and 11 each show a practical example of the NC program generated by the NC program generator 215. As shown in Fig. 6, if OPTYPE/ROUGH (rough processing) 601 is set as an APT command in the APT-CL data 214, the code "M380" is not inserted and a G-code and argument 1001 as "G332 R1" is inserted, as shown in Fig. 10.

Furthermore, in a cutting portion 1002, the arguments for G01 are set so that the feed rate is low for a portion where the cutting force is high and the feed rate is high for a portion where the cutting force is low.

On the other hand, if OPTYPE/FINISH (finishing processing) is set as an APT command in the APT-CL data 214, M380 and M381 as codes 1101 are inserted and a G-code and argument 1102 as "G332 R3" is inserted, as shown in Fig. 11. In a cutting portion 1103, the arguments for G01 are set so that the feed rate is constant.

As described above, according to this example embodiment, the user can generate a properly set processing program only by selecting an operation type on the selection screen, thereby implementing processing according to rough processing or finishing processing.

### [Other Example Embodiments]

While the invention has been particularly shown and described with reference to example embodiments thereof, the invention is not limited to these example embodiments. It will be understood by those of ordinary skill in the art that various changes in form and details may be made therein without departing from the spirit and scope of the present invention as defined by the claims. A system or apparatus including any combination of the individual features included in the respective example embodiments may be incorporated in the scope of the present invention.

The present invention is applicable to a system including a plurality of devices or a single apparatus. The present invention is also applicable even when an information processing program for implementing the functions of example embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described example embodiments.

This application is based upon and claims the benefit of priority from Japanese patent application No. 2021-64426, filed on April 5, 2021, the disclosure of which is incorporated herein in its entirety by reference.

## Claims

1. An information processing apparatus for generating a processing program for causing a machine tool to perform a plurality of processing steps, comprising:
a display unit that displays a selection screen for selecting one operation type from a plurality of operation types including at least rough processing and finishing processing; and
a processing program generator that describes (i) at least one selected from a group of a command for setting a time priority mode, a command for allowing a change of a feed rate, and a command for permitting processing during magazine turning in the processing program in a case where the rough processing is selected on the selection screen, and (ii) at least one selected from a group of a command for setting an accuracy priority mode, a command for making the feed rate constant, and a command for not permitting processing during magazine turning in the processing program in a case where the finishing processing is selected on the selection screen.

2. The information processing apparatus according to claim 1, further comprising:
a tool path data generator that adds an APT (Automatically Programmed Tools) command for classification into the rough processing or the finishing processing to tool path data written in an APT language in accordance with the selection on the selection screen,
wherein said processing program generator generates the processing program based on the tool path data added with the APT command in said tool path data generator.

3. The information processing apparatus according to claim 1 or 2, wherein said display unit displays operations in a tree structure, and displays, in a case where one of the operations displayed in the tree structure is selected, a selection screen for selecting an operation type as an operation type of the selected operation from rough processing, middle finishing processing, and finishing processing.

4. An information processing program for generating a processing program for performing a plurality of processing steps, which causes a computer to execute a method, comprising:
displaying a selection screen for selecting one of rough processing and finishing processing as an operation type; and
setting (i) at least one selected from a group of a command for setting a time priority mode, a command for allowing a change of a feed rate, and a command for permitting processing during magazine turning in the processing program in a case where the rough processing is selected on the selection screen, and (ii) at least one selected from a group of a command for setting an accuracy priority mode, a command for making the feed rate constant, and a command for not permitting processing during magazine turning in the processing program in a case where the finishing processing is selected on the selection screen.
